## Europäisches Patentamt
## European Patent Office
## Office européen des brevets

(11) Veröffentlichungsnummer: **0 027 994**
**B1**

(12) # EUROPÄISCHE PATENTSCHRIFT

(45) Veröffentlichungstag der Patentschrift:
**11.01.84**

(51) Int. Cl.³: **B 62 D 55/08,** B 62 D 55/10

(21) Anmeldenummer: **80106413.0**

(22) Anmeldetag: **21.10.80**

(54) **Gleisketten-Laufwerk.**

(30) Priorität: **25.10.79 DE 2943066**

(43) Veröffentlichungstag der Anmeldung:
**06.05.81 Patentblatt 81/18**

(45) Bekanntmachung des Hinweises auf die Patenterteilung:
**11.01.84 Patentblatt 84/2**

(84) Benannte Vertragsstaaten:
**AT BE CH FR GB IT LI LU NL SE**

(56) Entgegenhaltungen:
**DE - C - 406 479**
**FR - A - 1 480 408**
**US - A - 1 330 253**
**US - A - 1 547 043**
**US - A - 1 926 244**
**US - A - 2 442 354**

(73) Patentinhaber: **Krauss-Maffei Aktiengesellschaft,**
**Krauss-Maffei-Strasse 2, D-8000 München 50 (DE)**

(72) Erfinder: *Seit, Horst, Haus Nr. 28, D-8081 Steinbach (DE)*

BUNDESDRUCKEREI BERLIN

## Gleisketten-Laufwerk

Die Erfindung bezieht sich auf ein Gleisketten-Laufwerk gemäß Oberbegriff des Hauptanspruchs.

Bei einem Gleisketten-Laufwerk dieser Art, wie es beispielsweise aus der US-Patentschrift 2 442 354 bekannt ist, haben die Laufrollen auf der Lauffläche der Gleisketten Linienberührung, wonach sie beim Überrollen der zwischen den Kettengliedern befindlichen spaltbildenden Gliedstöße einsinken und an den Laufrollen Vertikalbewegungen hervorrufen, die am Fahrzeug und dessen Fahrwerk eine gleichförmige Schwingung hohen Energieinhalts verursachen, deren Frequenz von der Kettenteilung und der Geschwindigkeit abhängt.

Die Schwingung führt dazu, daß das Fahrzeug und insbesondere dessen Fahrwerksteile, wie z. B. die Stoßdämpfer, bereits bei Fahrt über völlig ebenen und festen Untergrund starken Belastungen ausgesetzt ist.

Der Erfindung liegt daher die Aufgabe zugrunde, die durch die Gliedstöße der Gleiskette verursachte Schwingung zu beseitigen.

Die Lösung dieser Aufgabe erfolgt durch ein gemäß dem Kennzeichen des Hauptanspruchs ausgestattetes Fahrwerk.

Durch diese Vorrichtung wird gewährleistet, daß das Laufrollenpaar beim Überfahren eines Gliedstoßes nicht mehr einsinken kann, weil immer eine der an einem Ende eines Tragarms gelagerten Laufrollen auf dem glatten Bereich der Lauffläche eines Kettengliedes aufliegt. Man erzielt dadurch den weiteren Vorteil, daß die Kettenglieder beim Überrollen des Gliedstoßes nicht mehr unter dem Druck der Laufrollen einknicken, was insbesondere bei mit Gummipolstern versehenen Kettengliedern den unerwünschten Schwingungseffekt noch verstärkt hat.

Um beim Einfedern des Laufwerks immer eine weitgehend parallele Lage der Ebene der versetzten Laufrollenachsen zu der Lauffläche der Gleiskette und somit gute Radaufstandskräfte zu gewährleisten, ist es zweckmäßig, jeweils zwei Tragarme zu einer Wiege zusammenzufassen, die an einem am Fahrzeug abgestützten Träger gelagert ist.

Weitere Merkmale und Vorteile ergeben sich aus der nachfolgenden Beschreibung anhand der Zeichnung und in Verbindung mit den Ansprüchen. Es zeigt

Fig. 1 in schematischer Darstellung die Seitenansicht zweier miteinander verbundener Kettenglieder,

Fig. 2 in schematischer Darstellung die Seitenansicht eines Gleitketten-Laufwerks mit versetzt angeordneten Laufrollenpaaren und

Fig. 3 eine Detailansicht der Lagerung eines Laufrollenpaares in vergrößertem Maßstab gemäß der Schnittlinie A-A in Fig. 2.

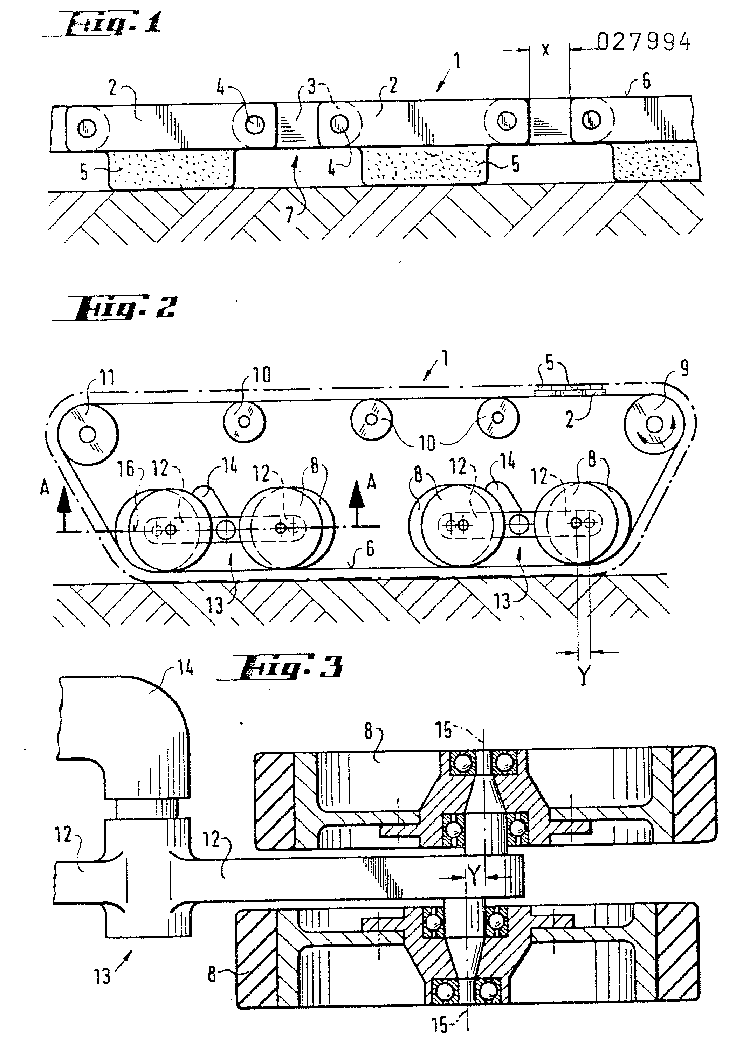

Fig. 1 zeigt ein Teilstück einer Gleiskette 1, deren Kettenglieder 2 mittels Verbindungsgliedern 3 und Bolzen 4 gelenkig miteinander verbunden sind. Auf der Unterseite der Kettenglieder 2 sind Gummipolster 5 befestigt, während die Oberseite als glatte Lauffläche 6 für die Laufrollen des Fahrwerks ausgebildet ist. Jeweils zwei benachbarte Kettenglieder 2 schließen einen spaltbildenden Gliedstoß 7 ein, der die Kettenglieder 2 im Abstand x voneinander trennt.

Das in Fig. 2 dargestellte Gleisketten-Laufwerk zeigt eine Gleiskette 1, auf deren Lauffläche 6 Laufrollen 8 abrollen und die über ein Treibrad 9, Stützrollen 10 und ein Umlenkrad 11 geführt ist.

Die Laufrollen 8 sind an Tragarmen 12 im Abstand Y versetzt zueinander gelagert, wobei in der dargestellten Ausführungsform jeweils zwei Tragarme 12 zu einer Wiege 13 zusammengefaßt sind. Diese ist an einem Träger 14 angelenkt, über den die Wiege 13 mit den Laufrollen 8 federnd am Fahrzeug (nicht dargestellt) abgestützt ist. Die zueinander versetzt angeordneten Laufrollenachsen 15 liegen in einer zur Lauffläche 6 parallelen Ebene 16 (Schnittebene A-A).

Fig. 3 zeigt einen Teil einer Wiege 13 mit einem Tragarm 12, an dem die Laufrollenachsen 15 in der Ebene 16 (Fig. 2) im Abstand Y befestigt sind.

Die Darstellung in der Draufsicht läßt die schmalbauende Lagerungsweise eines Laufrollenpaares mittels einer Wiege 13 erkennen. Es sind jedoch auch andere Ausführungsformen von Tragarmen denkbar, beispielsweise ein Tragarm, an dessen Ende die beiden Laufrollenachsen hintereinander, frei auskragend und kurbelwellenartig versetzt befestigt sind. Diese Anordnung kann für Anwendungsfälle zweckmäßig sein, bei denen das Laufrollenpaar besonders eng nebeneinander angeordnet sein muß oder bei denen zwischen den aufeinanderfolgenden Laufrollenpaaren kein Raum für einen zwischen die Laufrollenpaare greifenden Tragarm besteht.

Beim Abrollen der Laufrollenpaare 8 auf der Lauffläche 6 der Gleiskette 1 wird durch die versetzte Anordnung der Laufrollenachsen 15 gewährleistet, daß beim Überrollen des Gliedstoßes 7 immer eine Laufrolle 8 auf der glatten Lauffläche 6 eines Kettengliedes 2 zu liegen kommt. Befindet sich beispielsweise die innere Laufrolle über dem freien Spalt des Gliedstoßes 7, so liegt die äußere Laufrolle noch voll auf der Lauffläche 6 und verhindert so ein Absinken in den Spalt. Eine Schwingungserregung durch die Gliedstöße 7 kann somit nicht mehr eintreten.

Die beim Einfederungsvorgang sich verschiebende Aufstandsgeometrie eines Laufrollenpaares (die absolut gleichförmige Radlastverteilung der inneren und der äußeren Laufrolle ist nur in der horizontalen Lage der Wiege gegeben) ist äußerst gering und im praktischen Betrieb nicht wahrnehmbar, da sie von der Elastizität der Kettenelemente ausgeglichen wird.

Grundsätzlich ist derselbe Effekt auch dadurch zu erreichen, daß die Gliedstöße 7 versetzt angeordnet werden. Bei den derzeit gebräuchlichen Verbinderketten verbietet sich jedoch eine derartige Gestaltung der Gleisketten. Im Prinzip sind jedoch Gleisketten möglich, bei denen beide Maßnahmen kombiniert angewendet werden, d. h. eine Gleiskette mit versetzt gelegenen Gliedstößen und Laufrollenpaare, deren Laufrollenachsen in zu der Versetzung der Gliedstöße entgegengesetzter Richtung versetzt angeordnet sind.

**Patentansprüche**

1. Gleisketten-Laufwerk für Fahrzeuge, insbesondere Panzerfahrzeuge, mit einer aus gelenkig miteinander verbundenen Kettengliedern (2) bestehenden Gleiskette (1), die zwischen den Kettengliedern (2) spaltbildende Gliedstöße (7) aufweist, und mit an gegenüber dem Fahrzeugrahmen abgestützten Tragarmen (12) gelagerten Laufwerksrollen (8), die auf der, durch die Gliedstöße (7) unterbrochenen Lauffläche (6) der Gleiskette (1) abrollen, wobei an einem Tragarm (12) jeweils mindestens zwei Laufwerkrollen (8) nebeneinander gelagert sind, dadurch gekennzeichnet, daß die am Tragarm (12) befestigten Laufwerksrollenachsen (15) in einer zur Lauffläche (6) der Gleiskette (1) parallelen Ebene (16) in einem Abstand Y in Laufrichtung zueinander versetzt angeordnet sind, der mindestens der Spaltweite x der Gliedstöße (7) entspricht, vorzugsweise das 1- bis 1,5fache der Spaltweite x beträgt.

2. Gleisketten-Laufwerk nach Anspruch 1, dadurch gekennzeichnet, daß die Laufwerksrollenachsen (15) am Tragarm (12) frei auskragend befestigt sind.

3. Gleisketten-Laufwerk nach den Ansprüchen 1 und 2, dadurch gekennzeichnet, daß jeweils zwei Tragarme (12) zu einer Wiege (13) zusammengefaßt sind, die an einem am Fahrzeug abgestützten Träger (14) gelagert ist.

4. Gleisketten-Laufwerk nach den Ansprüchen 1 bis 3, dadurch gekennzeichnet, daß die Laufwerkrollenachsen (15) aus einem durchgehenden zylindrischen Zapfen mit gemeinsamer Achse bestehen, auf dem zur Herstellung der Achsversetzung um den Abstand Y Exzenterstücke drehfest aufschiebbar sind.

**Claims**

1. Endless track running gear for vehicles, more specially armored vehicles, comprising an endless track (1) that is made up of articulated track links (2) with joint gaps therebetween and which has track wheels (8) bearinged on support arms (12) that are supported in relation to the chassis of said vehicle, said wheels running on a running face (6), having joint gaps (7) therein, of the said endless track (1), and on a support arm (12) in each case at least two wheels (8) are bearinged side by side, characterized in that the axles (15) of the wheels fixed to the support arm (12) are placed in a plane (16) parallel to the running face (6) of the endless track (1) so as to be out of line with each other by a distance Y in the direction of motion, said distance being equal to at least the width (x) of the joint gaps (7) and is more specially equal to 1 to 1,5 times the said gap width (x).

2. Endless track running gear as claimed in claim 1 characterized by the said running gear axles (15) on the support arm (12) being cantilever axles.

3. Endless track running gear as claim in claims 1 and 2 characterized in that in each case two support arms (12) are joined together in the form of a rocker (13) that is rockingly joined with a support (14) supported on the vehicle.

4. Endless track running gear as claimed in any one of claims 1 to 3 characterized in that the wheel axles (15) are in the form of cylindrical pin made in a single piece from end to end and with a common axis and on which eccentric parts are keyed to make the system axially out of line.

**Revendications**

1. Mécanisme de roulement à chenille pour véhicules, notamment des véhicules blindés, comportant une chenille (1) se composant de patins (2) reliés entre eux de façon articulés, et qui comporte entre les patins (2) des intervalles d'espacement (7), ainsi que des galets de roulement (8) montés sur des bras porteurs (12) soutenus par le châssis du véhicule et qui roulent sur la surface de roulement (6) interrompue par les intervalles d'espacement (7), de la chenille (1), à chaque fois au moins deux galets de roulement (8) étant montés l'un à côté de l'autre sur un bras porteur (12), caractérisé en ce que les axes (15) des galets de roulement qui sont fixés sur un bras porteur (12) sont décalés l'un par rapport à l'autre dans le sens de marche d'une distance (Y) dans un plan (16) parallèle à la surface de roulement (6) de la chenille (1), cette distance correspondant au moins à la largeur (X) des intervalles d'espacement (7), en étant de préférence comprise entre 1 et 1,5 fois la largeur d'intervalle d'espacement (X).

2. Mécanisme de roulement à chenille selon la revendication 1, caractérisé en ce que les axes (15) des galets de roulement sont fixés sur un bras porteur (12) en faisant saillie librement.

3. Mécanisme de roulement à chenille selon la revendication 1 et 2, caractérisé en ce qu'à chaque fois deux bras porteurs (12) sont réunis sous forme d'un balancier (13) qui est monté sur un support (14) soutenu par le véhicule.

4. Mécanisme de roulement à chenille selon l'une quelconque des revendications 1 à 3, caractérisé en ce que les axes (15) des galets de roulement se composent d'un tourillon cylindrique continu d'axe commun, sur lequel, pour établir le décalage des axes de la distance (Y), des éléments excentriques peuvent être emmanchés sans possibilité de rotation.

**Fig. 1**

027994

**Fig. 2**

**Fig. 3**